# EUROPÄISCHE PATENTANMELDUNG

(11) **EP 4 837 407 A1**
(43) Veröffentlichungstag der Anmeldung: **11.11.2026**
(21) Anmeldenummer: 26177417.8
(22) Anmeldetag: 08.05.2026
(51) Int. Cl.: A01D 34/00

(54) **INTELLIGENTE BEHANDLUNGSVERZÖGERUNGSZEITEN NACH NIEDERSCHLAG**

(30) Priorität: 08.05.2025 DE 102025117694
(71) Anmelder: AL-KO Geräte GmbH, 89359 Kötz (DE)
(72) Erfinder: Trumpp, Daniel, 86420 Diedorf (DE)
(74) Vertreter: ERNICKE Patent- und Rechtsanwälte PartmbB

(57) **Zusammenfassung**

Computerimplementiertes Verfahren zur Bestimmung einer Behandlungsverzögerungszeit (BVZ, KBVZ) nach Niederschlag für ein Rasenbehandlungsgerät (20), insbesondere für einen Mähroboter oder Rasenmäher, wobei die Behandlungsverzögerungszeit (BVZ, KBVZ) auf Basis von Eingangsdaten (ED) mittels eines Prognoseverfahrens bestimmt wird.

## Beschreibung

Die vorliegende Erfindung betrifft ein Rasenbehandlungsgerät, insbesondere einen Mähroboter oder Rasenmäher und ein computerimplementiertes Verfahren zur Bestimmung einer Behandlungsverzögerungszeit nach Niederschlag.

In US 2024/0112109 A1 wird eine Arbeitszeit auf Basis von Flächeninformationen und historischen Arbeitsdaten unter Berücksichtigung von Parametern wie Größe, Arbeitsbedingungen sowie eingesetzten Ressourcen vorhergesagt.

In JP 2018-185594 A werden Zustandsdaten eines Pflanzenbestands erfasst, mit Positionsdaten verknüpft und zur Erstellung von Karten sowie zur Planung landwirtschaftlicher Arbeiten verwendet

Bisher werden feste Intervalle genutzt, um eine Rasenbehandlung bei/nach Nässe, wie das Mähen auf feuchtem Rasen, zu verhindern. Dies kann entweder zu langen Ausfallzeiten des Rasenbehandlungsgeräts oder zu einer ungeeigneten Rasenbehandlung führen.

Bisher bekannte Verfahren sind somit nicht optimal geeignet.

Mobile Rasenbehandlungsgeräte, insbesondere Mähroboter und Rasenmäher, können von einer Steuerung oder variablen Bestimmung einer Behandlungsverzögerungszeit profitieren. Eine den momentanen Betriebsbedingungen angepasste Behandlungsverzögerungszeit ermöglicht eine optimale Nutzung der Einsatzzeit des Rasenbehandlungsgeräts, reduziert Ausfallzeiten und verhindert Schäden am Rasenbehandlungsgerät oder Boden, indem beispielsweise das Mähen bei nassem/zu feuchtem Gras vermieden oder weniger wahrscheinlich wird.

Aufgabe dieser Offenbarung ist es die Bestimmung einer Behandlungsverzögerungszeit nach/bei Nässe zu verbessern. Die Lösung wird durch die Merkmale der eigenständigen Ansprüche definiert.

Die Behandlungsverzögerungszeit kann im Rahmen der vorliegenden Offenbarung aufgrund eines oder verschiedener Faktoren wie der Temperatur, des Niederschlags oder des Bodentyps bestimmt oder angepasst sein. Diese ein oder mehreren Faktoren können die Betriebsbedingungen für eine anstehende Bodenbearbeitung nach einem Niederschlagsereignis definieren. Die Betriebsbedingungen können insbesondere eine oder mehrere Umweltfaktoren umfassen.

Die vorliegende Offenbarung betrifft ein computerimplementiertes Verfahren zur Bestimmung einer Behandlungsverzögerungszeit nach Niederschlag für ein Rasenbehandlungsgerät, insbesondere für einen Mähroboter oder Rasenmäher.

Die bestimmte Behandlungsverzögerungszeit definiert eine Zeit in der das Behandeln des Bodens, insbesondere das Mähen des Rasens, nicht erfolgen sollte.

Die Bestimmung kann einen Verzögerungsstartzeitpunkt umfassen, also einen um die Behandlungsverzögerungszeit verschobenen Startzeitpunkt. Die Behandlungsverzögerungszeit kann flexibel und insbesondere gemäß den momentanen Betriebsbedingungen angepasst werden, wodurch Schäden am Rasen durch frühzeitiges Mähen bei zu hoher Bodenfeuchtigkeit vermieden wird.

Die Behandlungsverzögerungszeit definiert eine Zeit, in der das Mähen aufgrund von Feuchtigkeit und/oder Nässe unterbleiben sollte. Auf diese Weise wird sichergestellt, dass der Mähvorgang bei oder nach Niederschlag für eine ausreichende Dauer ausgesetzt bleibt, um eine Beschädigung des Rasens und/oder des Rasenbehandlungsgeräts zu vermeiden.

Eine Behandlungsverzögerungszeit verzögert eine vorzugsweise bereits geplante Rasenbehandlung und/oder einen bereits geplanten Rasenbehandlungsplan.

Die Behandlungsverzögerungszeit bewirkt insbesondere keine Neuberechnung eines Rasenbehandlungszeitpunkts und/oder eines Behandlungszeitraums. Die Behandlungsverzögerungszeit bewirkt vorzugsweise eine zeitliche Verschiebung eines bestehenden Startzeitpunkts und/oder eines bestehenden Zeitintervalls und/oder eines bestehenden Behandlungsplans.

Ein geplanter Startzeitpunkt bleibt vorzugsweise erhalten und wird um ein Zeitintervall verschoben.

Es erfolgt vorzugsweise keine vollständige Neuplanung und/oder Neuoptimierung eines Behandlungsplans. Es erfolgt insbesondere keine Ersetzung eines geplanten Mähvorgangs durch einen neu berechneten Zeitpunkt.

Die Behandlungsverzögerungszeit wirkt vorzugweise nur verzögernd auf den nächsten geplanten Startzeitpunkt.

Niederschlag kann im Rahmen dieser Offenbarung verschiedene Umwelt- und Wetterereignisse umfassen, welche eine Feuchtigkeit des Bodens zur Folge haben. Beispielsweis Schnee, Hagel, Frost, Nebel, Bewässerung, Überschwemmung und/oder die Bildung von Tau.

Die bestimmte Behandlungsverzögerungszeit wird in einer bevorzugten Ausführung an ein Rasenbehandlungsgerät, insbesondere an einen Mähroboter oder Rasenmäher ausgegeben, insbesondere direkt übertragen. Durch die Übertragung der bestimmten Behandlungsverzögerungszeit an das Rasenbehandlungsgerät wird eine automatische Anpassung des Mähprogramms ohne manuelles Eingreifen erreicht oder ermöglicht.

Das Verfahren kann in einer weiteren Ausführungsform durch das Rasenbehandlungsgerät ausgeführt werden.

In einer Ausführungsform wird die bestimmte Behandlungsverzögerungszeit in einer Speichereinheit gespeichert. Die Speicherung der bestimmten Behandlungsverzögerungszeit kann erfolgen, insbesondere die Speicherung separater BehandlungsverzögerungszeitWerte. Dies ermöglicht eine nachträgliche Analyse der Werte, wodurch langfristige Optimierungen in der Rasenpflege realisiert werden können.

In einer weiter bevorzugten Ausführungsform wird eine, insbesondere jede durch das Verfahren bestimmte Behandlungsverzögerungszeit an eine Nutzer-Schnittstelle ausgegeben. Durch die Ausgabe der bestimmten Behandlungsverzögerungszeitwerte an eine Nutzer-Schnittstelle erhält der Anwender Transparenz und Kontrolle über den aktuellen Status seines Rasenbehandlungsgeräts.

Die Nutzer-Schnittstelle kann beispielsweise Daten an eine mobile Applikation ausgeben. Die mobile Applikation kann beispielsweise auf einem Gerät des Anwenders installiert und ausgeführt sein. Der Nutzer erhält über die Ausgabe an der Nutzer-Schnittstelle jederzeit und von überall Zugriff auf die Daten und den Status des Rasenbehandlungsgeräts.

Das Computerimplementierte Verfahren umfasst vorzugsweise eine Schnittstelle zu einem Erfassungsmodul.

Das Erfassungsmodul ist dazu ausgebildet, Eingangsdaten zu erfassen und/oder zu beziehen.

Das Erfassungsmodul ist dazu ausgebildet, Daten von einem Rasenbehandlungsgerät zu empfangen, vorzugsweise Sensordaten. Durch den bevorzugt direkten Empfang von Daten des Rasenbehandlungsgeräts kann eine Reaktion auf Veränderungen der Betriebsbedingungen erfolgen.

Das Erfassungsmodul umfasst vorzugsweise mindestens eine Schnittstelle, insbesondere mindestens eine Datenschnittstelle und/oder Sensorschnittstelle. Die Schnittstelle befindet sich dabei bevorzugt am Einsatzort des Rasenbehandlungsgeräts und/oder ist Teil des Rasenbehandlungsgeräts. Dies ermöglicht eine präzise Erfassung mindestens eines Faktors, insbesondere eines Umweltfaktors. Der Faktor kann insbesondere durch einen Sensor erfasst sein.

Eine Datenschnittstelle ist bevorzugt eine Schnittstelle, über die externe Daten empfangen werden können, wie beispielsweise Wetterdaten.

Eine Sensorschnittstelle ist bevorzugt eine Schnittstelle, über die mit einem Sensor Eingangsdaten erfassbar sind, wie beispielsweise Temperatur, Bewölkung, Windstärke und/oder Feuchtigkeit. Die Anbindung an mindestens einen Sensor ermöglicht eine kontinuierliche Messung von mindestens einem Faktor, beispielsweise Temperatur- und Feuchtigkeitswerten, sodass Veränderungen präzise erfasst werden.

Das Erfassungsmodul ist bevorzugt dazu ausgebildet die erfassten und/oder bezogenen Daten auszugeben.

Die Behandlungsverzögerungszeit wird bevorzugt auf Basis von Eingangsdaten mittels eines Prognoseverfahrens bestimmt.

Das Prognoseverfahren bestimmt insbesondere eine zeitliche Differenz und/oder eine Verzögerungsdauer. Das Prognoseverfahren bestimmt insbesondere eine Verschiebungsgröße relativ zu einem bestehenden Startzeitpunkt und/oder einem bestehenden Zeitintervall.

Das Prognoseverfahren kann beliebig ausgebildet sein. Es kann ein Simulationsverfahren und/oder ein Kl-gestütztes Verfahren umfassen. In einer bevorzugten Ausführung umfasst das Prognoseverfahren ein Simulationsverfahren und ein Kl-gestütztes Verfahren. In einer weiteren Ausführungsform umfasst das Prognoseverfahren ein Simulationsverfahren oder ein Kl-gestütztes Verfahren. Durch die Nutzung eines Simulationsverfahrens und/oder Kl-gestützten Verfahrens kann die Prognosequalität erhöht werden, was eine verbesserte Steuerung ermöglicht.

In einer Ausführungsform werden die Eingangsdaten, bevorzugt durch das Erfassungsmodul, an ein Simulationsverfahren ausgegeben. Das Simulationsverfahren bestimmt eine Behandlungsverzögerungszeit. Die bestimmte Behandlungsverzögerungszeit kann, insbesondere an das Rasenbehandlungsgerät, ausgegeben werden.

In einer weiteren Ausführungsform werden die Eingangsdaten, bevorzugt durch das Erfassungsmodul, an ein Kl-gestütztes Verfahren ausgegeben. Das Kl-gestützte Verfahren bestimmt eine Behandlungsverzögerungszeit. Die Behandlungsverzögerungszeit kann, insbesondere an ein Rasenbehandlungsgerät, ausgegeben werden.

In einer weiteren Ausführungsform werden die Eingangsdaten, bevorzugt durch das Erfassungsmodul, an ein Simulationsverfahren ausgegeben. Das Simulationsverfahren bestimmt eine Behandlungsverzögerungszeit. Diese kann eine initiale Behandlungsverzögerungszeit sein. Die bestimmte (initiale) Behandlungsverzögerungszeit kann an ein KI-gestütztes Verfahren ausgegeben werden. Das Kl-gestützte Verfahren bestimmt auf Basis der bestimmten (initialen) Behandlungsverzögerungszeit eine korrigierte Behandlungsverzögerungszeit. Die korrigierte Behandlungsverzögerungszeit kann, insbesondere an ein Rasenbehandlungsgerät, ausgegeben werden.

Die korrigierte Behandlungsverzögerungszeit kann in einer Speichereinheit gespeichert werden, insbesondere in Ergänzung zu der initialen Behandlungsverzögerungszeit.

In einer weiteren Ausführungsform werden die Eingangsdaten, bevorzugt durch das Erfassungsmodul, an ein Simulationsverfahren ausgegeben. Das Simulationsverfahren bestimmt eine Trocknungsdauer. Die Trocknungsdauer kann an ein Kl-gestütztes Verfahren ausgegeben werden. Das Kl-gestützte Verfahren bestimmt auf Basis der Trocknungsdauer eine Behandlungsverzögerungszeit. Die bestimmte Behandlungsverzögerungszeit kann, insbesondere an ein Rasenbehandlungsgerät, ausgegeben werden.

Das Simulationsverfahren simuliert bevorzugt den Trocknungsverlauf am Einsatzort. Das Simulationsverfahren kann, bevorzugt auf Basis des Trocknungsverlaufs eine Trocknungsdauer und/oder eine Behandlungsverzögerungszeit bestimmen.

Die Trocknungsdauer entspricht insbesondere der Behandlungsverzögerungszeit und/oder einem Anteil der Behandlungsverzögerungszeit. Die Trocknungsdauer beschreibt vorzugsweise eine Zeitdifferenz zwischen einem aktuellen Feuchtigkeitszustand und einem Zielzustand. Die Trocknungsdauer kann insbesondere äquivalent zu dem Intervall bzw. der Zeitdauer der Behandlungsverzögerungszeit sein.

Der Trocknungsverlauf ist ein Verlauf von Parameterwerten über die Zeit, wobei die Parameterwerte einen erreichten Trocknungszustand kennzeichnen.

Der Trocknungsverlauf am Einsatzort wird vorzugsweise mithilfe von Eingangsdaten prognostiziert.

Die Eingangsdaten können Daten aus dem Erfassungsmodul und/oder Daten vom Rasenbehandlungsgerät umfassen.

Das Simulationsverfahren kann beliebig ausgebildet sein. Bevorzugt nutzt das Simulationsverfahren eine physikalisch-mathematische Modellierung und/oder ein numerisches Simulationsverfahren, um, vorzugsweise auf Basis von Eingangsdaten, den Trocknungsverlauf am Einsatzort zu prognostizieren und/oder die Trocknungsdauer zu bestimmen.

Auf Basis des Trocknungsverlaufs kann eine Trocknungsdauer und/oder eine Behandlungsverzögerungszeit bestimmt werden.

In einer weiteren Ausführungsform kann auf Basis der Trocknungsdauer oder des Trocknungsverlaufs eine Behandlungsverzögerungszeit bestimmt werden. Vorzugsweise ist dies ein Zeitpunkt, an dem der Rasen eine zur Rasenbehandlung angemessene Feuchtigkeit aufweist, und/oder ein Zeitintervall, nach dessen Ablauf der Rasen eine zur Rasenbehandlung angemessene Feuchtigkeit aufweist. Vorzugsweise kann eine bestimmte Behandlungsverzögerungszeit ausgegeben werden. Die Anpassung der Behandlungsverzögerungszeit basierend auf der Trocknungsdauer ermöglicht eine intelligente und bevorzugt witterungsabhängige Steuerung des Rasenbehandlungsgeräts, wodurch die Qualität der Bodenbearbeitung und/oder die Einsatzdauer erhöht wird.

Eine prognostizierte Trocknungsdauer, ein prognostizierter Trocknungsverlauf und/oder eine bestimmte Behandlungsverzögerungszeit kann in einer bevorzugten Ausführungsform an ein Kl-gestütztes Verfahren ausgegeben werden.

In einer weiteren Ausführungsform kann das Simulationsverfahren eine prognostizierte Trocknungsdauer, einen prognostizierten Trocknungsverlauf und/oder eine berechnete Behandlungsverzögerung an das Rasenbehandlungsgerät ausgeben.

Das Simulationsverfahren wird vorzugsweise an den Einsatzort des Rasenbehandlungsgeräts angepasst. Diese Anpassung kann auf beliebige Weise erfolgen. Eine bevorzugte Ausführung betrifft eine Anpassung an den Einsatzort, indem lokale Daten, insbesondere aus dem Erfassungsmodul, genutzt werden. Lokale Daten können lokal erfasste Daten sein und/oder Daten, die sich auf den konkreten Einsatzort beziehen. Durch die Berücksichtigung lokaler Daten wird das Simulationsverfahren an spezifische Standortbedingungen angepasst, wodurch die Vorhersagegenauigkeit steigt.

Das Simulationsverfahren wird bevorzugt auf Basis von Eingangsdaten ausgeführt, insbesondere von Eingangsdaten aus dem Erfassungsmodul. Das Simulationsverfahren kann in einer weiteren Ausführungsform auf Basis von Daten ausgeführt werden, welche von einer externen Schnittstelle bezogen werden. In einer weiteren Ausführungsform kann das Simulationsverfahren auf Basis von Daten ausgeführt werden, die aus einem Kl-gestützten Verfahren bezogen werden.

In einer bevorzugten Ausführungsform wird eine Kombination eines Simulationsverfahrens und eines Kl-gestützten Verfahrens genutzt. In einer besonders bevorzugten Ausführungsform wird ein prognostizierter Trocknungsverlauf oder eine Trocknungsdauer von einem Simulationsverfahren ausgegeben. In einer besonders bevorzugten Ausführungsform wird ein prognostizierter Trocknungsverlauf oder eine Trocknungsdauer von einem KI-gestützten Verfahren bezogen und insbesondere auf deren Basis eine Behandlungsverzögerungszeit bestimmt. Die Kombination eines Simulationsverfahrens und eines Kl-gestützten Verfahrens verbessert die Prognosequalität.

In einer weiteren Ausführungsform kann eine (initiale) Behandlungsverzögerungszeit durch eine Simulation bestimmt werden. Die bestimmte (initiale) Behandlungsverzögerungszeit kann an ein Kl-gestütztes Verfahren ausgegeben werden. Das Kl-gestützte Verfahren kann auf Basis einer bestimmten (initialen) Behandlungsverzögerungszeit eine korrigierte Behandlungsverzögerungszeit bestimmen. Die korrigierte Behandlungsverzögerungszeit kann durch das Kl-gestützte Verfahren ausgegeben werden.

Das Kl-gestützte Verfahren kann beliebig ausgebildet sein. Das Kl-gestützte Verfahren lernt bevorzugt auf Basis von Eingangsdaten eine verbesserte Behandlungsverzögerungszeit zu bestimmen.

Das Kl-gestützte Verfahren ist bevorzugt ein supervised-learning Verfahren und/oder umfasst ein vortrainiertes System.

Das Kl-gestützte Verfahren kann bevorzugt mit Trainingsdaten nachtrainiert, welche bevorzugt am Einsatzort erzeugt werden. Das Kl-gestützte Verfahren kann so an die Gegebenheiten des Einsatzortes und/oder die momentanen Betriebsbedingungen angepasst werden.

In einer bevorzugten Ausführungsform bezieht das Kl-gestützte Verfahren einen prognostizierten Trocknungsverlauf oder eine Trocknungsdauer und bestimmt (auf dieser Basis) eine Behandlungsverzögerungszeit. Die automatische Berechnung der Behandlungsverzögerungszeit durch das Kl-gestützte Verfahren verringert den manuellen Anpassungsaufwand und steigert die Betriebseffizienz.

Das Kl-gestützte Verfahren kann in einer weiteren Ausführungsform eine bestimmte Behandlungsverzögerungszeit empfangen. Auf Basis der bestimmten Behandlungsverzögerungszeit kann das Kl-gestützte Verfahren eine korrigierte Behandlungsverzögerungszeit bestimmen.

Das Kl-gestützte Verfahren kann Eingangsdaten, bevorzugt aus einem Erfassungsmodul und/oder dem Rasenbehandlungsgerät beziehen und bestimmt auf dieser Basis eine (initiale oder korrigierte) Behandlungsverzögerungszeit.

Die bestimmte initiale Behandlungsverzögerungszeit und die korrigierte Behandlungsverzögerungszeit können gleich oder abweichend sein.

Das Kl-gestützte Verfahren kann eine bestimmte initiale oder korrigierte Behandlungsverzögerungszeit an ein Simulationsverfahren, eine Bewertungseinheit und/oder an das Rasenbehandlungsgerät ausgeben.

Die Bewertungseinheit kann beliebig ausgebildet sein. Die Bewertungseinheit bewertet in einer bevorzugten Ausführung die bestimmte Behandlungsverzögerungszeit. Durch die Bewertung der bestimmten Behandlungsverzögerungszeit kann eine Optimierung erfolgen, sodass die Mähzyklen noch besser auf die tatsächlichen Bedingungen abgestimmt werden. Bevorzugt wird die bestimmte Behandlungsverzögerungszeit durch eine Bewertungseinheit überprüft, wodurch die Mähzyklen präziser an die tatsächlichen Umweltbedingungen angepasst werden können.

Die Bewertung der bestimmten Behandlungsverzögerungszeit kann auf beliebige Weise erfolgen. In einer bevorzugten Ausführung kann die Bewertung zumindest anteilig durch eine Nutzerbewertung erfolgen. An einen Nutzer kann beispielsweise über eine Schnittstelle eine bestimmte Behandlungsverzögerungszeit zur Bewertung ausgegeben werden. Die Möglichkeit zur Nutzerbewertung ermöglicht eine Rückmeldung durch den Nutzer über die Qualität der berechneten Verzögerungszeiten, wodurch das System fortlaufend optimiert werden kann. Die Bewertung der Behandlungsverzögerungszeit kann direkt oder indirekt über mindestens einen Hilfsparameter erfolgen. Ein Hilfsparameter kann eine Bewertung des Arbeitsergebnisses betreffen, insbesondere für eine Bodenbearbeitung, die (direkt) nach Ablauf der bestimmten Behandlungsverzögerungszeit erfolgt ist.

Die (direkte) Bewertung der bestimmten Behandlungsverzögerungszeit durch einen Nutzer kann auf beliebige Weise erfolgen, beispielsweise auf Basis einer Bewertung des Rasenzustands zum Ende der bestimmten Behandlungsverzögerungszeit. Die Bewertung des Rasenzustands kann insbesondere repräsentativ für den Trocknungsgrad sein und/oder für die Eignung des Rasens für die Bodenbearbeitung. Indem der Nutzer den Rasenzustand am Ende der bestimmten Behandlungsverzögerungszeit bewertet, wird eine realitätsnahe Anpassung der Steuerung ermöglicht, sodass Fehlentscheidungen minimiert werden.

Durch die Bewertung des Rasenzustands nach Ablauf der Verzögerungszeit kann überprüft werden, ob ein berechneter Mähzeitpunkt mit den tatsächlichen Betriebsbedingungen übereinstimmt.

Die Bewertung der bestimmten Behandlungsverzögerungszeit, insbesondere die Bewertung des Rasenzustands zum Ende der bestimmten Behandlungsverzögerungszeit, kann durch einen Abgleich der prognostizierten Umgebungsbeschaffenheit, insbesondere der Rasen- und/oder Bodenbeschaffenheit, mit der tatsächlichen Umgebungsbeschaffenheit, insbesondere der Rasen- und/oder Bodenbeschaffenheit erfolgen.

Die Bewertung der bestimmten Behandlungsverzögerungszeit kann beispielsweise durch einen Feuchtigkeitssensor erfolgen, der den tatsächlichen Trocknungszustand während und/oder nach Ablauf der bestimmten Behandlungsverzögerungszeit bestimmt.

Die Bewertungseinheit kann aus den Bewertungsdaten Trainingsdaten erzeugen. Durch die Trainingsdaten kann das System kontinuierlich verbessert werden, indem es an reale Umweltbedingungen anpasst wird.

Die Trainingsdaten können zum weiteren Training des Kl-gestützten Verfahrens und/oder zur Präzisierung des Simulationsverfahrens genutzt werden. Das Kl-gestützte Verfahren und/oder das Simulationsverfahren profitieren von den erzeugten Trainingsdaten, da diese die Vorhersagegenauigkeit erhöhen und/oder die Bestimmung der optimalen Mähzeitpunkte fördern.

Das Simulationsverfahren kann durch die Trainingsdaten präzisiert werden. Die Präzisierung des Simulationsverfahrens erfolgt bevorzugt insbesondere durch die Erweiterung der physikalisch-mathematische Modellierung und/oder numerische Simulationsverfahren mit den Trainingsdaten. Die Erweiterung kann beispielsweise durch Anpassung eines Simulationsparameters erfolgen.

Das Kl-gestützte Verfahren kann durch ein Training mit den Trainingsdaten an die lokale Umgebung angepasst werden.

Die Trainingsdaten können eine bestimmte (initiale) Behandlungsverzögerungszeit, sowie Bewertungsdaten und/oder eine korrigierte Behandlungsverzögerungszeit umfassen.

Die Trainingsdaten können in einer Speichereinheit gespeichert werden. Durch die Speicherung steht eine kontinuierlich erweiterbare Datenbasis zur Verfügung, die zur Optimierung der Prognosegenauigkeit genutzt werden kann.

Eine Speichereinheit zur Speicherung der bestimmten (initialen) und/oder eine Speichereinheit zur Speicherung der korrigierten Behandlungsverzögerungszeit und/oder eine Speichereinheit zur Speicherung der Trainingsdaten können durch die gleiche Speichereinheit implementiert oder als mindestens zwei separate Speichereinheiten ausgestaltet sein.

Die Speichereinheit kann gespeicherte Daten als Analysedaten ausgeben.

Die Speichereinheit umfasst bevorzugt eine Schnittstelle zu einer Analyseeinheit.

Die Analyseeinheit kann Analysedaten empfangen. Die Analyseeinheit kann Analysedaten auswerten, insbesondere als ein Analyseergebnis. Die Analyseeinheit kann die Auswertung von Daten ausgeben.

Die Trainingsdaten können an ein Kl-gestütztes Verfahren, an ein Rasenbehandlungsgerät und/oder an ein Simulationsverfahren ausgegeben werden.

Die Trainingsdaten können durch einen Filter auf Plausibilität geprüft werden. Ein Plausibilitätsfilter sorgt für die Vermeidung fehlerhafter oder ungenauer Daten, wodurch die Qualität der bestimmten Behandlungsverzögerungszeit verbessert wird.

Die Steuerung für das Rasenbehandlungsgerät gemäß der vorliegenden Offenbarung ist bevorzugt dazu ausgebildet, ein computerimplementiertes Verfahren zur Bestimmung einer Behandlungsverzögerungszeit auszuführen. Durch die Implementierung eines computerimplementierten Verfahrens zur Bestimmung der Behandlungsverzögerungszeit in der Steuerung des Rasenbehandlungsgeräts kann die Planung der Bodenbearbeitung, insbesondere die Mähplanung vollständig automatisiert und etwaig optimiert sein, was zu geringeren Ausfallzeiten führt.

Ein Softwareprodukt gemäß der vorliegenden Offenbarung ist bevorzugt ein Softwareprodukt, welches Anweisungen umfasst, die dazu ausgebildet sind bei Ausführung auf einer Datenverarbeitungseinrichtung, insbesondere auf einer Steuerung für ein Rasenbehandlungsgerät, ein computerimplementiertes Verfahren zur Bestimmung einer Behandlungsverzögerungszeit auszuführen. Die Bereitstellung als Softwareprodukt erleichtert die Integration in bestehende Systeme und unterstützt die Steuerung verschiedener Gerätetypen.

Das computerimplementierte Verfahren zur Bestimmung einer Behandlungsverzögerungszeit kann auf beliebige Weise und durch beliebige Mittel ausgeführt sein oder werden, insbesondere durch eine Datenverarbeitungseinrichtung, weiter insbesondere durch eine Steuerung einer Rasenbehandlungsgeräts und/oder durch eine Steuerung für ein oder mehrere Rasenbehandlungsgeräte, die beispielsweise Bestandteil einer externen Kontrollstation sein kann. Alternativ oder zusätzlich kann das Computerimplementierte Verfahren als ein computerimplementierter Dienst in einer externen, insbesondere Cloud-basierten Rechenumgebung ausgeführt sein oder werden.

Die Erfindung ist in den Zeichnungen beispielhaft und schematisch dargestellt. Diese zeigen:
- Figur 1:: Schematische Darstellung des Einsatzortes
- Figur 2:: Schematische Darstellung des Verfahrens

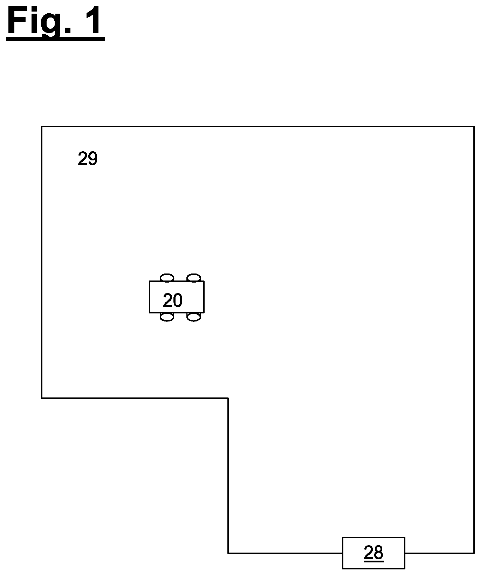

Figur 1 zeigt beispielhaft einen Einsatzort (29) mit einem Rasenbehandlungsgerät (20). Der Einsatzort (29) ist ein Garten. Das Rasenbehandlungsgerät (20) ist ein autonomer Mäher. Das Erfassungsmodul (23) kann als Teil des Mähers ausgebildet und/oder als Teil der Basisstation (28) ausgebildet sein.

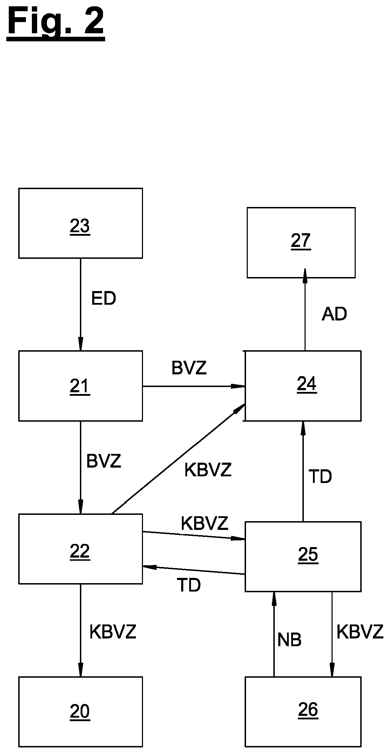

Figur 2 zeigt eine schematische Darstellung des Verfahrens.

Das Erfassungsmodul (23) erfasst Eingangsdaten (ED). Diese Eingangsdaten (ED) können beispielsweise Wetterdaten (von einer lokalen Wetterstation oder von einem entfernten Wetterdienst) sein und/oder Daten zur Feuchtigkeit sein. Die Eingangsdaten können anteilig oder vollständig direkt durch das Erfassungsmodul (23) erfasst werden, beispielsweise mit Hilfe eines Sensors, und/oder anteilig oder vollständig durch das Erfassungsmodul (23) empfangen werden. Das Erfassungsmodul (23) kann einteilig oder mehrteilig ausgebildet sein. Ist das Erfassungsmodul (23) mehrteilig ausgebildet, so können die verschiedenen Teile an verschiedenen Orten angeordnet sein. Das Erfassungsmodul (23) kann beispielsweise als Teil des Rasenbehandlungsgeräts (20) und/oder als Teil der Basisstation (28) ausgebildet sein. Das Erfassungsmodul (23) weist bevorzugt eine Schnittstelle zur Übertragung der Eingangsdaten (ED) auf. Über eine Schnittstelle kann das Erfassungsmodul (23) die Eingangsdaten (ED) insbesondere an das Simulationsmodul (21) weitergeben.

In einem Ausführungsbeispiel werden die Eingangsdaten (ED), beispielsweise Wetterdaten und Niederschlagsdaten vom Erfassungsmodul (23) empfangen und/oder gemessen und anschließend an das Simulationsmodul (21) ausgegeben.

Das Simulationsmodul (21) kann Eingangsdaten (ED) über eine Schnittstelle empfangen. Das Simulationsmodul (21) kann, insbesondere mithilfe eines mathematischen Verfahrens, aus den Eingangsdaten (ED) eine Behandlungsverzögerungszeit (BVZ) bestimmen. Die bestimmte Behandlungsverzögerungszeit (BVZ) kann durch das Simulationsmodul (21) ausgegeben werden. Die bestimmte Behandlungsverzögerungszeit (BVZ) kann insbesondere an die Speichereinheit (24) und/oder das KI-Modul (22) ausgegeben werden. Die von dem Simulationsmodul (21) bestimmte Behandlungsverzögerungszeit kann für die Steuerung des Rasenbearbeitungsgeräts (direkt) ausgegeben werden. Alternativ kann die von dem Simulationsmodul (21) bestimmte Behandlungsverzögerungszeit eine initiale Behandlungsverzögerungszeit sein, die etwaig nachfolgend korrigiert wird.

In einem Ausführungsbeispiel empfängt das Simulationsmodul (21) Wetter- und Niederschlagsdaten von dem Erfassungsmodul (23). Das Simulationsmodul (21) kann auf Basis der empfangenen Daten einen Trocknungsverlauf bestimmen. Auf Basis des bestimmten Trocknungsverlaufs kann das Simulationsmodul (21) einen Zeitpunkt bestimmen, an welchem der Boden erwartungsgemäß trocken genug für eine Behandlung durch das Rasenbehandlungsgerät (20) ist. Die Zeitdauer bis zu diesem Zeitpunkt kann als Behandlungsverzögerungszeit bestimmt sein. Die bestimmte Behandlungsverzögerungszeit (BVZ) kann an die Speichereinheit (24) und/oder an das KI-Modul (22) ausgegeben werden.

Das KI-Modul (22) ist dazu ausgebildet eine (initiale) Behandlungsverzögerungszeit (BVZ) zu empfangen. Auf Basis der (initialen) Behandlungsverzögerungszeit (BVZ) kann das KI-Modul (22) eine korrigierte Behandlungsverzögerungszeit (KBVZ) bestimmen. Die korrigierte Behandlungsverzögerungszeit (KBVZ) umfasst eine beliebige Korrektur der bestimmten Behandlungsverzögerungszeit (BVZ). Die Korrektur kann beispielsweise eine Verlängerung oder Verkürzung um einen bestimmten Zeitbetrag umfassen. Die Korrektur kann alternativ oder zusätzliche die Multiplikation mit einem Skalierungsfaktor umfassen. Alternativ oder zusätzlich kann die Korrektur eine Ersetzung durch einen anderen Wert umfassen.

Die korrigierte Behandlungsverzögerungszeit (KBVZ) beruht auf dem Kl-gestützten Verfahren, welches durch eine bereits bekannte Behandlungsverzögerungszeit (BVZ, KBVZ), insbesondere in Verbindung mit einer Bewertung der Behandlungsverzögerungszeit (BVZ, KBVZ) trainiert worden ist. Das Kl-gestützte Verfahren kann durch Trainingsdaten (TD) weiter verbessert werden. Das Kl-gestützte Verfahren kann durch am Einsatzort (29) erzeugte Trainingsdaten (TD) an den Einsatzort (29) angepasst werden. Das KI-Modul (22) kann die korrigierte Behandlungsverzögerungszeit (KBVZ) ausgeben. Das Kl-gestützte Verfahren kann Trainingsdaten (TD) empfangen und diese insbesondere zum Training nutzen.

In einem Ausführungsbeispiel wird das Kl-gestützte Verfahren durch ein KI-Modul (22) ausgeführt. Das KI-Modul (22) kann beliebig angeordnet sein.

In einem Ausführungsbeispiel empfängt das KI-Modul (22) eine bestimmte (initiale) Behandlungsverzögerungszeit (BVZ) von dem Simulationsmodul (21). Das KI-Modul (22) bestimmt eine korrigierte Behandlungsverzögerungszeit (KBVZ). Die korrigierte Behandlungsverzögerungszeit (KBVZ) kann an die Bewertungseinheit (25) und/oder das Rasenbehandlungsgerät (20) ausgegeben werden. Es können Trainingsdaten (TD) aus der Bewertungseinheit (25) bezogen werden. Die Trainingsdaten (TD) können zum Trainieren des KI-Moduls (22) genutzt werden.

Das Rasenbehandlungsgerät (20) ist bevorzugt dazu ausgebildet, eine (initiale oder korrigierte) Behandlungsverzögerungszeit (BVZ, KBVZ) zu empfangen. Das Rasenbehandlungsgerät (20) kann durch die (initiale oder korrigierte) Behandlungsverzögerungszeit (BVZ, KBVZ) den geplanten Startzeitpunkt des nächsten Mähvorgangs planen und/oder verschieben. Die Verschiebung des Startzeitpunkts des nächsten Mähvorgangs kann zeitlich nach vorne oder nach hinten erfolgen.

In einem Ausführungsbeispiel wird die korrigierte Behandlungsverzögerungszeit (KBVZ) aus dem KI-Modul (22) an die Steuerung des Rasenbehandlungsgeräts (20) ausgegeben. Das KI-Modul (22) kann als Komponente des Rasenbehandlungsgeräts (20) ausgebildet sein.

Die Speichereinheit (24) ist bevorzugt dazu ausgebildet, eine bestimmte (initiale) Behandlungsverzögerungszeit (BVZ) und/oder eine korrigierte Behandlungsverzögerungszeit (KBVZ) und/oder Trainingsdaten (TD) zu speichern. Die Speichereinheit (24) ist dazu ausgebildet, Daten an einer Schnittstelle auszugeben. Die Speichereinheit (24) kann einteilig oder mehrteilig ausgebildet sein.

In einem Ausführungsbeispiel ist die Speichereinheit (24) als Teil des Rasenbehandlungsgeräts (20) ausgebildet. Die Speichereinheit (24) ist dazu ausgebildet, eine Behandlungsverzögerungszeit (BVZ, KBVZ) und/oder Trainingsdaten (TD) zu speichern.

Die Speichereinheit (24) ist dazu ausgebildet, Daten auszugeben. Die Speichereinheit (24) ist dazu ausgebildet, Daten als Analysedaten (AD) auszugeben. Analysedaten (AD) umfassen insbesondere eine Behandlungsverzögerungszeit (BVZ, KBVZ) und/oder mindestens eine Bewertung und/oder Trainingsdaten (TD). Die Analysedaten (AD) können insbesondere an eine Analyseeinheit (27) ausgegeben werden.

Die Analyseeinheit (27) ist bevorzugt dazu ausgebildet, Analysedaten (AD) zu empfangen. Die Analyseeinheit (27) ist dazu ausgebildet Analysedaten (AD) zu verarbeiten und/oder mindestens ein Analyseergebnis, insbesondere auf Basis von Analysedaten (AD), zu erstellen. Die Analyseeinheit (27) ist dazu ausgebildet, Daten, insbesondere Analyseergebnisse, auszugeben.

Die Bewertungseinheit (25) ist bevorzugt dazu ausgebildet, eine korrigierte Behandlungsverzögerungszeit (KBVZ) zu empfangen und/oder eine externe Bewertung, insbesondere eine Nutzerbewertung (NB) zu empfangen. Die Bewertungseinheit (25) ist dazu ausgebildet, aus Bewertungsdaten und/oder einer (korrigierten) Behandlungsverzögerungszeit (BVZ, KBVZ) Trainingsdaten (TD) zu erzeugen. Die Bewertungseinheit (25) kann beispielsweise Trainingsdaten (TD) durch eine Verknüpfung einer Behandlungsverzögerungszeit (BVZ, KBVZ) und mindestens einer Bewertung erzeugen. Die Bewertung kann eine Nutzerbewertung (NB) und/oder eine durch die Bewertungseinheit (25) erzeugte Bewertung sein. Es können auch beliebige andere Bewertungen sein.

Die Bewertungseinheit (25) kann eine korrigierte Behandlungsverzögerungszeit (KBVZ) und/oder eine Behandlungsverzögerungszeit (BVZ) an eine Nutzer-Schnittstelle zur Anzeige an einen Nutzer (26) ausgeben. Der Nutzer (26) kann die (initiale) Behandlungsverzögerungszeit (BVZ) und/oder korrigierte Behandlungsverzögerungszeit (KBVZ) bewerten. Die Bewertung des Nutzers (26) wird als Teil von Nutzerdaten an die Bewertungseinheit (25) ausgegeben werden.

Die Bewertungseinheit (25) kann eine Bewertung erzeugen. Die Bewertung kann auf Basis eines Abgleichs erzeugt werden. Beispielsweise kann eine bestimmte (initiale) und/oder eine korrigierte Behandlungsverzögerungszeit (KBVZ) abgeglichen werden mit den tatsächlichen Betriebsbedingungen und/oder dem tatsächlichen Status des Einsatzortes (29). Die Bewertungseinheit (25) kann ermitteln, ob der Einsatzort (29) zum vorgesehenen Startzeitpunkt eines Bodenbearbeitungsvorgangs, welcher durch die (korrigierte) Behandlungsverzögerungszeit (BVZ, KBVZ) geplant oder verschoben wurde, tatsächlich ausreichend trocken ist oder war. Auf dieser Basis kann eine Bewertung vorgenommen werden. Eine Bewertung kann beispielsweise durch die Verknüpfung von Wetterdaten und/oder Sensordaten mit einer (korrigierten) Behandlungsverzögerungszeit (BVZ, KBVZ) erzeugt werden.

Auf Basis der Nutzerbewertung (NB) und/oder der in der Bewertungseinheit (25) erzeugten Bewertung der Behandlungsverzögerungszeit (BVZ) werden Trainingsdaten (TD) erzeugt. Die Trainingsdaten (TD) können an die Speichereinheit (24) und/oder das KI-Modul (22) ausgegeben werden.

Über die Nutzer-Schnittstelle kann einem Nutzer (26) eine (korrigierte) Behandlungsverzögerungszeit (BVZ, KBVZ) angezeigt werden. Über die Nutzer-Schnittstelle kann in Antwort auf die angezeigte Behandlungsverzögerungszeit eine Bewertung erfasst werden. Die Bewertung wird bevorzugt an eine Bewertungseinheit (25) ausgegeben.

### Bezugszeichen

- 20: Rasenbehandlungsgerät
- 21: Simulationsmodul
- 22: KI-Modul
- 23: Erfassungsmodul
- 24: Speichereinheit
- 25: Bewertungseinheit
- 26: Nutzer
- 27: Analyseeinheit
- 28: Basisstation
- 29: Einsatzort

- BVZ: Behandlungsverzögerungszeit
- KBVZ: Korrigierte Behandlungsverzögerungszeit

- ED: Eingangsdaten
- NB: Nutzerbewertung
- TD: Trainingsdaten
- AD: Analysedaten

## Patentansprüche

1. Computerimplementiertes Verfahren zur Bestimmung einer Behandlungsverzögerungszeit (BVZ, KBVZ) nach Niederschlag für ein Rasenbehandlungsgerät (20), insbesondere für einen Mähroboter oder Rasenmäher, wobei die Behandlungsverzögerungszeit (BVZ, KBVZ) auf Basis von Eingangsdaten (ED) mittels eines Prognoseverfahrens bestimmt wird.

2. Computerimplementiertes Verfahren nach Anspruch 1, wobei das Prognoseverfahren ein Simulationsverfahren und/oder ein Kl-gestütztes Verfahren umfasst.

3. Computerimplementiertes Verfahren nach Anspruch 1 oder 2, wobei die Behandlungsverzögerungszeit (BVZ, KBVZ) einen Verzögerungsstartzeitpunkt umfasst.

4. Computerimplementiertes Verfahren nach einem der vorhergehenden Ansprüche, wobei die Behandlungsverzögerungszeit (BVZ, KBVZ) eine Zeit definiert, in der die Rasenbehandlung infolge eines Niederschlags unterbleiben sollte.

5. Computerimplementiertes Verfahren nach einem der vorhergehenden Ansprüche, wobei das Kl-gestützte Verfahren vortrainiert ist und/oder wobei auf Basis einer Bewertung der Behandlungsverzögerungszeit (BVZ, KBVZ) Trainingsdaten (TD) für das Kl-gestützte Verfahren erzeugt werden und/oder wobei die Trainingsdaten (TD) die Behandlungsverzögerungszeit (BVZ, KBVZ), sowie die Bewertungsdaten und/oder korrigierte Steuerdaten umfassen.

6. Computerimplementiertes Verfahren nach einem der vorhergehenden Ansprüche, wobei die Bewertung der Behandlungsverzögerungszeit (BVZ, KBVZ) durch eine Nutzerbewertung (NB) und/oder durch eine Bewertung des Rasenzustands zum Ende der Behandlungsverzögerungszeit (BVZ, KBVZ) erfolgt.

7. Computerimplementiertes Verfahren nach einem der vorhergehenden Ansprüche, wobei die Bewertung des Rasenzustands am Ende der Behandlungsverzögerungszeit (BVZ, KBVZ) durch einen Abgleich der prognostizierten Umgebungsbeschaffenheit, insbesondere der Rasen- und/oder Bodenbeschaffenheit, mit der tatsächlichen Umgebungsbeschaffenheit, insbesondere der Rasen- und/oder Bodenbeschaffenheit, erfolgt und/oder wobei das Kl-gestützte Verfahren durch die erzeugten Trainingsdaten (TD) weiter trainiert wird, wobei die Trainingsdaten (TD) insbesondere lokal erfasst werden und/oder eine Spezifikation des Einsatzortes (29) umfassen.

8. Computerimplementiertes Verfahren nach einem der vorhergehenden Ansprüche, wobei das Prognoseverfahren an den Einsatzort (29), insbesondere mittels lokaler Eingangsdaten (ED), adaptiert wird.

9. Computerimplementiertes Verfahren nach einem der vorhergehenden Ansprüche, wobei das Simulationsverfahren den Trocknungsverlauf am Einsatzort (29) prognostiziert.

10. Computerimplementiertes Verfahren nach einem der vorhergehenden Ansprüche, wobei die Trainingsdaten (TD) in einer Speichereinheit (24) gespeichert werden.

11. Computerimplementiertes Verfahren nach einem der vorhergehenden Ansprüche, wobei die Behandlungsverzögerungszeit (BVZ, KBVZ) den Startzeitpunkt eines nächsten Rasenbehandlungsvorgangs, insbesondere des nächsten Mähvorgangs zeitlich verschiebt und/oder wobei die Behandlungsverzögerungszeit (BVZ, KBVZ) an ein Rasenbehandlungsgerät (20), insbesondere einen Mähroboter oder Rasenmäher ausgegeben wird.

12. Computerimplementiertes Verfahren nach einem der vorhergehenden Ansprüche, wobei die Eingangsdaten (ED) durch ein Erfassungsmodul (23) und/oder das Rasenbehandlungsgerät (20) erzeugt und/oder bezogen werden können und/oder wobei das Erfassungsmodul (23) eine Sensorschnittstelle und/oder eine Datenschnittstelle umfasst.

13. Computerimplementiertes Verfahren nach einem der vorhergehenden Ansprüche, wobei die erzeugten Trainingsdaten (TD) und/oder die korrigierten Steuerdaten mittels eines Filters auf Plausibilität überprüft werden.

14. Steuerung für ein Rasenbehandlungsgerät (20), insbesondere ein Mähroboter oder Rasenmäher, wobei die Steuerung dazu ausgebildet ist ein computerimplementiertes Verfahren nach einem der vorhergehenden Ansprüche auszuführen.

15. Softwareprodukt umfassend Anweisungen, die dazu ausgebildet sind bei Ausführung auf einer Datenverarbeitungseinrichtung, insbesondere einer Steuerung für ein Rasenbehandlungsgerät (20), ein computerimplementiertes Verfahren nach einem der vorherigen Ansprüche auszuführen.
